# EUROPEAN PATENT APPLICATION

(11) **EP 2 693 763 A1**
(43) Date of publication of application: **05.02.2014**
(21) Application number: 13175801.3
(22) Date of filing: 09.07.2013
(51) Int. Cl.: H04N 21/45, H04N 21/454, H04N 21/475, H04N 21/432, H04N 21/418

(54) **Method of content transaction and apparatus for content transaction**

(30) Priority: 02.08.2012 KR 20120084661
(71) Applicant: Samsung Electronics Co., Ltd, Gyeonggi-do 443-742 (KR)
(72) Inventor: Kim, Soo-hyang, Gyeonggi-do (KR)
(74) Representative: Davies, Robert Ean

(57) **Abstract**

An apparatus for content transaction is disclosed, which includes a Common Interface Conditional Access Module(CICAM) and a host device which are connected through a common interface. The host device receives a signal for playing a recorded content and determines whether the recorded content includes information about the viewing rating restriction by the CICAM and executes a procedure of relieving the viewing rating restriction by at least one of the CICAM and the host device according to the result of determination. A method of content transaction is also disclosed, which includes judging whether the recorded content includes information about the viewing rating restriction by the CICAM and executing a procedure of relieving the viewing rating restriction by at least one the CICAM and the host device according to the result of the determination.

## Description

### CROSS-REFERENCE TO RELATED APPLICATION

This application claims priority from Korean Patent Application No. 10-2012-0084661, filed on August 2, 2012 in the Korean Intellectual Property Office, the entire disclosure of which is incorporated herein by reference.

### BACKGROUND

### Field

Apparatuses and methods consistent with the exemplary embodiments relate to a method of content transaction and an apparatus for content transaction in a digital broadcast system, and more particularly to a method of content transaction and an apparatus for content transaction capable of preventing the waste of time in the restriction and the repeated checking related to unnecessary viewing ratings.

### Description of the Related Art

Recently the digitalization of broadcast media has progressed rapidly, and the digital broadcast now includes a digital ground wave broadcast, a digital satellite broadcast, a digital cable broadcast, etc. The digital broadcast is classified into a free channel broadcast and a pay channel broadcast, the pay channel broadcast being able to be watched by descrambling a scrambled broadcast according to the Conditional Access System(CAS) type or the Common Interface(CI) type.

The CAS type is a type of encrypting a specific pay channel broadcast and saving the CAS system in the interior of a set-top box, and the CI type is a type of implementing a card type Common Interface Conditional Access Module(CICAM) module which is capable of transmitting the pay channel as a special module separated from a broadcast receiving apparatus. In case of the CI type, if the CICAM is inserted in the PCMCIA(Personal Computer Memory Card International Association) slot, the CICAM is connected to the CI module through a member certification and a scrambled TS(Transport Stream) is transmitted through the CI module and the CICAM descrambles the scrambled TS.

An art related to adigital broadcast receiving system saves and processes information about the restriction of viewing ratings simultaneously when a broadcast signal is recorded or played. The CI plus specification of Version 1.3 saves the information about the viewing rating which is transmitted from the CICAM with the recorded content. Therefore the CICAM may set the viewing rating of the recorded content as the information about the viewing rating transmitted to the CICAM when the recorded content is played.

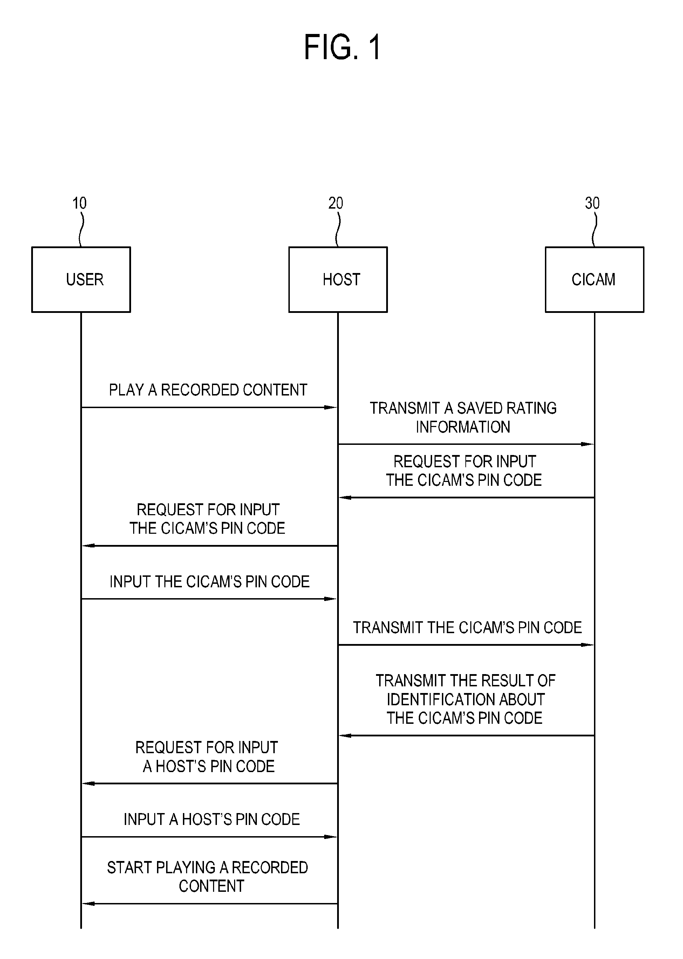

FIG. 1 shows the signal flow of a content transacting method according to a related art.

If content is recorded according to the CI plus specification of Version 1.3, it is inconvenient to remove the viewing rating restriction for a recorded content from both a host device and the CICAM. Namely, a user can play a recorded content ordinarily only after a user inputs a PIN code twice to remove the viewing rating restriction.

For example, it is assumed that the value for the viewing rating restriction is 8+ and a PIN code is "1234" in the host device 20 and the value for the viewing rating restriction is 8+ and a PIN code is "1010" in the CICAM 30.If the value for the viewing rating restriction is 7+ in the broadcast signal for recording, the user 10 can play the recorded content only after inputting "1010"in a PIN code input box for the CICAM 30 and inputting "1234" in a PIN code input box for the host device 20.

Therefore a user is inconvenienced by having to input the PIN code twice when a recorded digital content is played, as a related art of digital contents transaction type emphasizes only profitability and a protection of contents.

### SUMMARY

Accordingly, one or more exemplary embodiments may provide a method of content transaction and an apparatus for content transaction which shorten a transaction time of digital contents.

One or more exemplary embodiments may provide a method of content transaction and an apparatus for content transaction which reduce inconvenience of the user's personal identification number (PIN) code being input twice when a digital content is recorded and played.

One or more exemplary embodiments may provide the method of content transaction and the apparatus for content transaction.

The foregoing and/or other aspects are achieved by providing a method of a content transaction in the broadcast receiving system including the Common Interface Conditional Access Module (CICAM) and a host device which are connected through a common interface at a time of playing a recorded content, the method of content transaction comprising: judging whether the recorded content comprises information about a viewing rating restriction; and relieving the viewing rating restriction by at least one from among the CICAM the host device according to a result of the determination.

According to an aspect of another exemplary embodiment, the relieving the viewing rating restriction related to the host device may be performed if information about the viewing rating restriction by the CICAM is not included in the recorded content.

According to an aspect of another exemplary embodiment, the relieving the viewing rating restriction related to the host device may be performed if the viewing rating restriction by the CICAM included in the recorded content is unnecessary or the CICAM is not able to process the recorded content.

According to an aspect of another exemplary embodiment, the relieving may further include identifying a personal identification number (PIN) code of the CICAM using the information about the viewing rating restriction by the CICAM which is included in the recorded content; comparing a setting value of the viewing rating restriction by the CICAM with a setting value of the restriction by watching grade by the host device; and relieving the viewing rating restriction by the CICAM only or relieving the viewing rating restriction by both the CICAM and the host device, according to acomparison result.

According to an aspect of another exemplary embodiment, the identifying the personal identification number (PIN) code of the CICAM may further comprise transmitting the setting value of the viewing rating restriction which is included in the recorded content to the CICAM; receiving a request signal for inputting the PIN code of the CICAM from the CICAM; displaying a request screen for inputting the PIN code of the CICAM; receiving the input signal of the PIN code of the CICAM and transmitting the received signal to the CICAM; and receiving a confirm signal about the PIN code from the CICAM.

The foregoing and/or other aspects are achieved by providing an apparatus for content transaction including a Common Interface Conditional Access Module (CICAM); and a host device connected to the CICAM via a common interface.

The apparatus for content transaction may include the host device which receives a signal for playing a recorded content, determines whether the recorded content includes information about a viewing rating restriction by the CICAM, and relieves the viewing rating restriction by at least one from among the CICAM the host device, according to a result of the determination.

The apparatus for content transaction may include the CICAM which requests the host device to transmit an input of a PIN code and transmits confirmative information about the PIN code to the host device.

The apparatus for content transaction according to an exemplary embodiment may comprisethe host device which comprisesa receiver configured to receive a broadcast signal; a signal processor configured to process the received broadcast signal as displayable; and a controller configured to execute a confirmation procedure of the personal identification number (PIN) code of the CICAM according to a signal for request an input of the PIN code which is received from the CICAM.

The controller may executes a procedure of relieving the viewing rating restriction by the host device if the information about the viewing rating restriction by the CICAM is not included in the recorded content.

The controller may execute a procedure of relieving the viewing rating restriction by the host device if the viewing rating restriction by the CICAM included in the recorded content is unnecessary or the CICAM is not able to process the recorded content.

The controller may identify a personal identification number (PIN) code of the CICAM using the information about the viewing rating restriction by the CICAM which is included in the recorded content, compare a setting value of the viewing rating restriction by the CICAM with a setting value of the viewing rating restriction by the host device and relieve the viewing rating restriction by the CICAM only or relieve the viewing rating restriction by both the CICAM and the host device according to a comparison result.

The CICAM may be detachable from the host device.
According to yet another exemplary embodiment, there is provided a system for a content transaction. The system may comprise: an interface module; and a host device connected to the interface module via a common interface, wherein the host device receives a signal for playing a recorded content, determines whether the recorded content includes information about a viewing rating restriction by the CICAM, and relieves the viewing rating restriction by at least one from among the interface module and the host device, according to a result of the determination, and wherein the interface module requests the host device to transmit an input of a personal identification number (PIN) code and transmits confirmative information about the PIN code to the host device.

The host device may comprise: a receiver configured to receive a broadcast signal; a signal processor configured to process the received broadcast signal as displayable; and a controller configured to execute a confirmation procedure of the PIN code of the interface module according to a signal for requesting an input of the PIN code which is received from the interface module.

The controller may execute a procedure of relieving the viewing rating restriction by the host device if the information about the viewing rating restriction by the interface module is not included in the recorded content.

The controller may execute a procedure of relieving the viewing rating restriction by the host device if the viewing rating restriction by the interface module included in the recorded content is unnecessary or the interface module is not able to process the recorded content.

The controller may identify a PIN code of the interface module using the information about the viewing rating restriction by the interface module which is included in the recorded content, compare a setting value of the viewing rating restriction by the interface module with a setting value of the viewing rating restriction by the host device, and relieve the viewing rating restriction by the interface module only or relieve the viewing rating restriction by both the interface module and the host device according to a comparison result.

The interface module may comprise a Common Interface Conditional Access Module (CICAM).

### BRIEF DESCRIPTION OF THE DRAWINGS

The above and/or other aspects will become apparent and more readily appreciated from the following description of exemplary embodiments, taken in conjunction with the accompanying drawings, in which:

FIG. 1 shows an exemplary illustration of a signal process according to content transaction method of a related technical art;

FIG. 2 shows an illustration of the broad configuration according to an exemplary embodiment;

FIG. 3 shows an illustration of a detailed configuration according to an exemplary embodiment;

FIG. 4 shows a flow chart of a content transaction method according to an exemplary embodiment; and

FIG. 5 shows an exemplary illustration of a signal process according to a content transaction method of an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

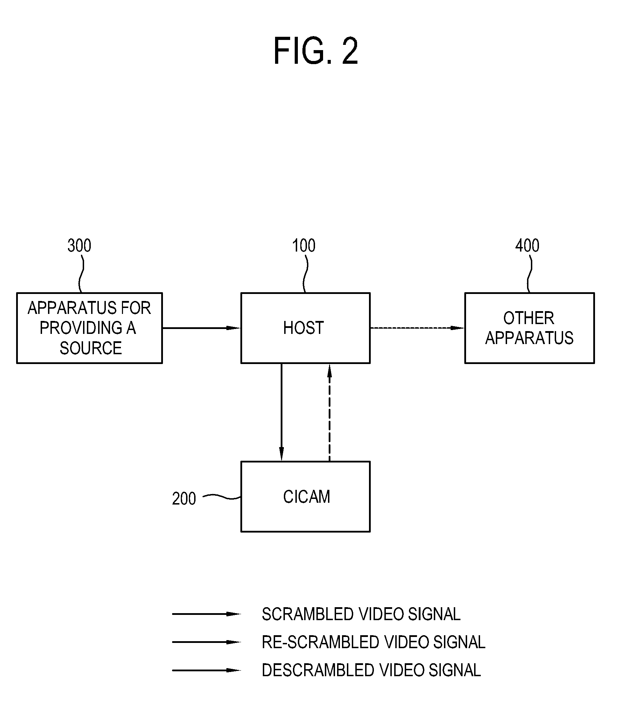

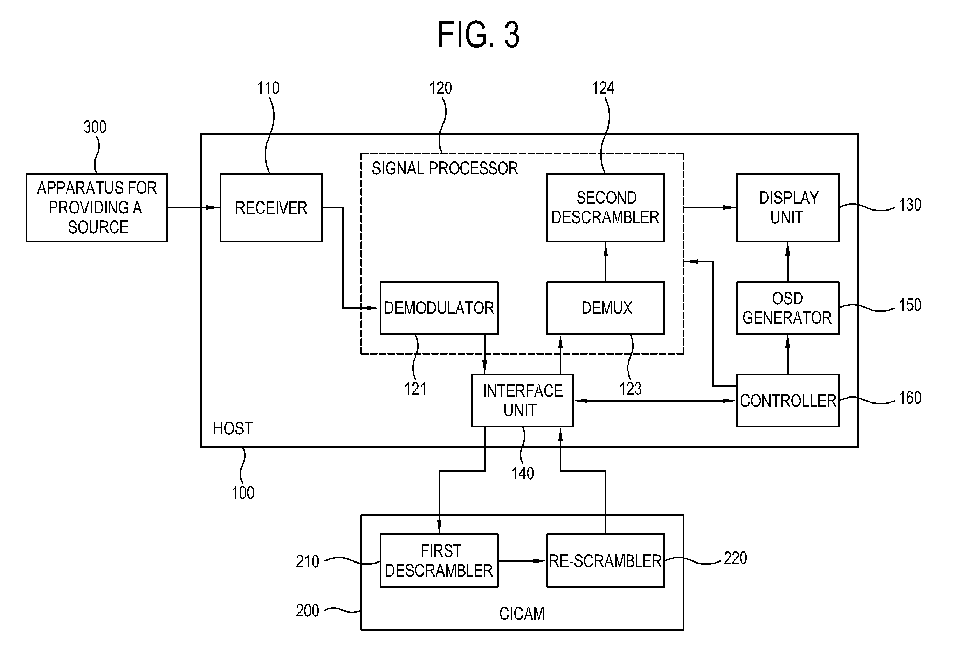

FIG. 2 illustrates the broad configuration of an apparatus for a content transaction according to an exemplary embodiment. FIG. 3 illustrates the more detailed configuration of an apparatus for a content transaction according to an exemplary embodiment.

As shown FIG. 2, a system or apparatus for content transaction includes a host device 100, a conditional access device 200 and an apparatus for providing a source 300.

The apparatus for providing a source 300 is an apparatus for providing the host device 100 with a video signal, for example, a pay broadcast signal. The apparatus for providing a source 300 includes an apparatus which is capable of transmitting a digital broadcast signal including content through a terrestrial, cable, satellite, IP(internet protocol) or the like medium. The apparatus for providing a source 300 may further include not only a service provider(SP) which encrypts and transmits content but also a contents provider(CP) which makes content.

The apparatus for providing a source 300 may provide a scrambled video signal to the host device 100.

When the conditional access device 200 is connected to the host device 100 through an interface unit 140, the host device 100 transmits a scrambled video signal which is received from the apparatus for providing a source 300 to the conditional access device 200. A content transaction method and an apparatus for content transaction according to an exemplary embodiment may be explained as the host device 100 is a digital television receiver, the interface unit 140 is a common interface(CI plus), the conditional access device 200 is an attachable or detachable Conditional Access Module(CAM) to a host device 100 via the common interface (CI plus), namely a Common Interface Conditional Access Module (CICAM).

The CICAM 200 receives and descrambles the scrambled video signal, and re-scrambles the descrambled video signal and transmits the re-scrambled video signal to the host device 100 again. The host device 100 displays the video signal after descrambling the re-scrambled video signal which is received from the CICAM 200. Therefore the CICAM 200 reconverts the scrambled video signal to a processable video signal and transmits it to the host device 100.

As shown FIG. 3, a host device 100 may include a receiving unit 110, a signal processor 120, a display unit 130, an interface unit 140, an on screen display (OSD) generator 150 and a controller 160 controlling the foregoing components, and the CICAM 200 may include a first descrambler 210 and a re-scrambler 220.

The host device 100 is an electronic device which can receive a video signal from an external device.The host device 100 may receive a digital video signal.For example, the host device 100 maybe embodied as a digital TV(DTV), an IPTV(Internet Protocol TV), a smart TV, a set top box (STB), etc. Then, the smart TV may include an open software platform which is capable of providing a two-way service to a user, may search and consume various contents at the same time of displaying a real time broadcast signal, and mayprovide a convenient user environment.

The receiving unit 110 receives a digital broadcast signal from an external device and outputs the received broadcast signal tuned by a selected receiving bandwidth.The receiving unit 110 may include an antenna which receives a digital broadcast signal and a tuner which tunes a channel according to a user's selection. The digital broadcast signal may include a broadcast signal of a High Definition Multimedia Interface (HDMI) standard.

The receiving unit 110 may receive an analog or digital broadcast signal which is transmitted from a broadcast station by a wireless or wired manner, namely an airwave or cable type.

The receiving unit 110 may be implemented in various forms according to the type of standard of a broadcast signal and the type of the host device 100. The receiving unit 110 may receive a broadcast signal which is implemented as a radio frequency (RF) signal according to an airwave type by a wireless manner or as a composite/component video signal according to a cable type by a wired manner.

The signal processor 120 may process the received video signal as displayable in the display unit 130. The signal processor 120 may include a demodulator 121 which demodulates the received video signal, a demultiplexer (hereinafter referred to as 'demux') 123 which separatesthe video signal into an audio/video signal and a data signal, and the second descrambler 124 which descrambles a video signal which is re-scrambled by the CICAM 200.

In addition, the signal processor 120 may further include a decoder(not shown) which decodes an audio/video signal separated by the demux 123 and a scaler(not shown) which executes scaling the video signal according to the output standard of a display unit 130.

The display unit 130 displays a video corresponding to the video signal which is outputted from the signal processor 120.The display unit 130 may include a display panel(not shown) which displays a video thereon and a panel drive unit(not shown) which controls a drive of the display panel. The drive type of the display unit 130 is not limited to a certain type, so the display unit 130 has various display types including liquid crystal, plasma, light emitting diode, organic light-emitting diode, surface-conduction electronic-emitter, carbon nano-tube, nano-crystal, etc.

The interface unit 140 may be connected or inserted to a plurality of Common Interface Conditional Access Module(CICAM) 200 which are capable of descrambling a scrambled video signal and be implemented as a Common Interface (CI) slot. The Common Interface (CI) slot may include a PCMCIA(Personal Computer Memory Card International Association) slot.

If a scrambled video signal is transmitted to the receiving unit 110, the scrambled video signal is transmitted to the CICAM 200which is connected to the interface unit 140, through the interface unit 140 by the control of the control unit 160.

The CICAM 200 is a different module from the host device 100 and may be implemented as a smart card. As including a Conditional Access System (CAS), the first descrambler 210 may descramble a scrambled video signal or a scrambled TS(transport stream) which is received through the interface unit 140.

The re-scrambler 220 may re-scramble the TS descrambled by the first descrambler 210. A contents protection may be accomplished for a communication between the CICAM 200 and the host device 100 by the re-scramble function. Therefore, the re-scrambled TS may be protected from an illegal reproduction.

The CICAM 200 may transmit the re-scrambled video signal which is re-scrambled by a re-scrambler 220 to the demux 123 through an interface unit 140. The demux 123 transmits the re-scrambled video signal to the second descrambler124, and the second descrambler 124 descrambles the re-scrambled video signal to provide a video signal which is processable in the host device 100.

The OSD generator 150 may generatean indicator screen for requesting the inputting of a PIN code and display it in the display unit 130 by the control of the control unit 160.

A.A host device 100 may identify a CICAM's operation related to the viewing rating restriction using the following information. The following information is specified in the specification of the CI plus V1.3.

a-1. cc_PIN_capabilities_reply : the restriction setting related to user ratings in the CICAM by a user(CICAM rating)

a-2. cc_PIN_event : the setting value of the restriction related to content ratings is transmitted from the CICAM during a content's recording(CICAM content rating)

a-3. cc_PIN_reply : the result of an PIN code's identification which is inputted by a user in the input box of the CICAM during a content's playing or an identification of status related to the unnecessariness of the viewing rating restriction(the identification of the CICAM's PIN code).

B.User's setting value in a host device

b-1. the setting value of the restriction by a user

b-2. the PIN code which is set by a user in a host device

C.The information which is included in broadcast information about the viewing rating restriction

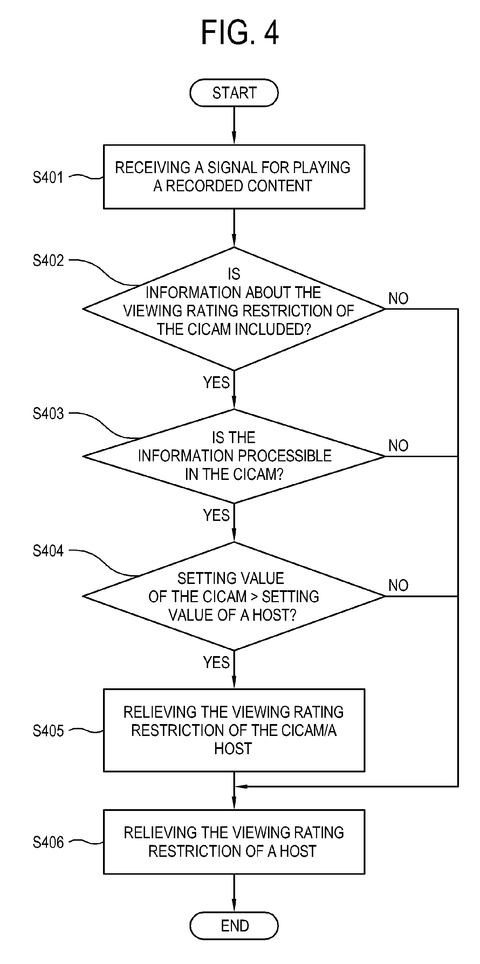

FIG. 4 shows a flow chart of a content transaction method according to an exemplary embodiment. The following method is based on an operation of a control unit 160. For example, "receiving" is the receiving of a control unit and "determination" is the determination of a control unit.

When a signal for playing a recorded content is received(S401), a control unit 160 determines whether information about the viewing rating restriction by a CICAM 200 is included in the recorded content(S402).

If the information about the viewing rating restriction by the CICAM 200 is not included, the control unit 160 executes only relieves the viewing rating restriction by a host device100(S406).

If the information about the viewing rating restriction by the CICAM 200 is included, the control unit 160 determines whether the viewing rating restriction by the CICAM in the recorded content is unnecessary or whether the CICAM is able to process the content. If the restriction of watching grade of the CICAM is unnecessary or the CICAM is not able to process the content, the control unit 160 executes only a procedure of relieving the viewing rating restriction by the host device 100(S406).

On the other hand, if the recorded content is processable in the CICAM 200 and a user inputs a PIN code of the CICAM correctly, the control unit 160 compares a CICAM's setting value of the restriction of watching grade with a host device's setting value of the restriction of watching grade(S404). If the CICAM's setting value of the restriction of watching grade is smaller than the host device's setting value of the viewing rating restriction, the control unit 160 executes only a procedure of relieving the viewing rating restriction by the host device(S406).

As a result of the comparison, if the CICAM's setting value of the viewing rating restriction is larger than the host device's setting value of the restriction of watching grade, the control unit 160 executes both a procedure of relieving the viewing rating restriction by the CICAM 200 and a procedure of relieving the viewing rating restriction by the host device 100 (S405).

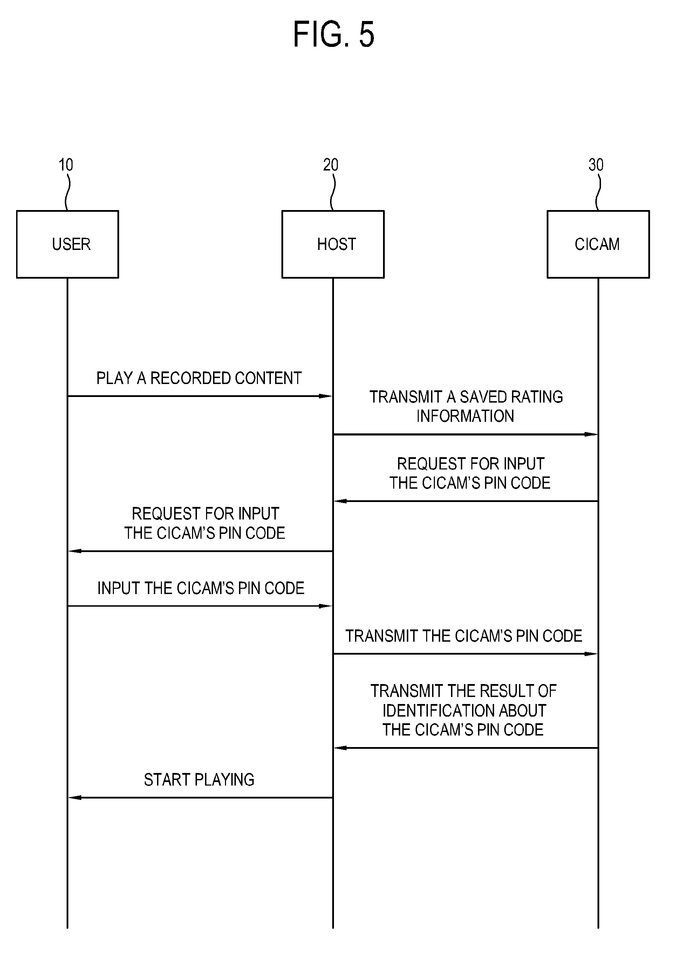

FIG. 5 shows an exemplary illustration of a signal process according to a content transaction method of an exemplary embodiment. The procedure of identifying a CICAM's personal identification number (PIN) code, which is executed first, will be made as follows.

A control unit 160 transmits a setting value of the viewing rating restriction which is included in a recorded content.

If a signal for requesting an input of the CICAM's PIN code is received from the CICAM, the control unit 160 displays a screen for requesting an input of the CICAM's PIN code to a display unit.

The control unit 160 receives the signal of a PIN code which is inputted by a user input device and transmits it to the CICAM.

The control unit 160 receives a signal for an identification about a PIN code from the CICAM.

If a user inputs the CICAM's PIN code correctly through the above operations, the control unit 160 compares a CICAM's setting value of the viewing rating restriction with a host device's setting value of the viewing rating restriction and executes only a procedure of relieving the viewing rating restriction by a host device when the CICAM's setting value of the viewing rating restriction is smaller than the host device's setting value of the viewing rating restriction. Therefore, a user's inconvenience of inputting a PIN code repeatedly may be relieved.

However, if the CICAM's setting value of the viewing rating restriction is larger than the host device's setting value of the viewing rating restriction, the control unit 160 executes both of procedure of relieving the viewing rating restriction by the CICAM and a procedure of relieving the viewing rating restriction by a host device.

Although a few exemplary embodiments have been shown and described, it will be appreciated by those skilled in the art that changes may be made in theseexemplary embodiments without departing from the principles and spirit of the invention, the scope of which is defined in the appended claims and their equivalents.
Attention is directed to all papers and documents which are filed concurrently with or previous to this specification in connection with this application and which are open to public inspection with this specification, and the contents of all such papers and documents are incorporated herein by reference.
All of the features disclosed in this specification (including any accompanying claims, abstract and drawings), and/or all of the steps of any method or process so disclosed, may be combined in any combination, except combinations where at least some of such features and/or steps are mutually exclusive.
Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.
The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of content transaction in a broadcast receiving system including a Common Interface Conditional Access Module(CICAM) and a host device which are connected through a common interface at a time of playing a recorded content, the method of content transaction comprising:
determining whether the recorded content comprises information about a viewing rating restriction; and
relieving at least one of the CICAM and the host device of the viewing rating restriction according to a result of the determination.

2. The method of the content transaction according to claim 1, wherein the relieving the viewing rating restriction by the host device is performed if information about the viewing rating restriction by the CICAM is not included in the recorded content.

3. The method of the content transaction according to claim 1, wherein the relieving the viewing rating restriction by the host device is performed if the viewing rating restriction by the CICAM included in the recorded content is unnecessary or the CICAM is not able to process the recorded content.

4. The method of the content transaction according to claim 1, wherein the relieving further comprises:
identifying a personal identification number (PIN) code of the CICAM using the information about the viewing rating restriction by the CICAM, which is included in the recorded content;
comparing a setting value of the viewing rating restriction by the CICAM with a setting value of the viewing rating restriction by the host device; and
relieving the viewing rating restriction by the CICAM only or relieving both the viewing rating restriction by the CICAM and the viewing rating restriction by the host device, according to a comparison result.

5. The method of the content transaction according to claim 4, wherein the identifying the PIN code of the CICAM further comprises:
transmitting the setting value of the viewing rating restriction which is included in the recorded content to the CICAM;
receiving a request signal for inputting the PIN code of the CICAM from the CICAM;
displaying a request screen for inputting the PIN code of the CICAM;
receiving the input signal of the PIN code of the CICAM and transmitting the received signal to the CICAM; and
receiving a confirm signal about the PIN code from the CICAM.

6. A apparatus for a content transaction comprising:
a Common Interface Conditional Access Module (CICAM); and
a host device connected to the CICAM via a common interface,
wherein the host device receives a signal for playing a recorded content, determines whether the recorded content includes information about a viewing rating restriction by the CICAM, and relieves at least one of the CICAM and the host device of the viewing rating restriction, according to a result of the determination, and
wherein the CICAM requests the host device to a PIN code and transmits confirmative information about the PIN code to the host device.

7. The apparatus for the content transaction according to claim 6, the host device comprises:
a receiver configured to receive a broadcast signal;
a signal processor configured to process the received broadcast signal as displayable;
and
a controller configured to execute a confirmation procedure of the PIN code of the CICAM according to a signal for requesting an input of the PIN code which is received from the CICAM.

8. The apparatus for content transaction according to claim 7, wherein the controller executes a procedure of relieving the viewing rating restriction by the host device if the information about the viewing rating restriction by the CICAM is not included in the recorded content.

9. The apparatus for content transaction according to claim 7, wherein the controller executes a procedure of relieving the viewing rating restriction by the host device if the viewing rating restriction by the CICAM included in the recorded content is unnecessary or the CICAM is not able to process the recorded content.

10. The apparatus for content transaction according to claim 7, wherein the controller identifies a personal identification number (PIN) code of the CICAM using the information about the viewing rating restriction by the CICAM which is included in the recorded content, compares a setting value of the viewing rating restriction by the CICAM with a setting value of the viewing rating restriction by the host device, and relieves the viewing rating restriction by the CICAM only or relieves the viewing rating restriction by both the CICAM and the host device according to a comparison result.

11. The apparatus according to claim 6, wherein the CICAM is detachable from the host device.

12. A system for a content transaction comprising:
an interface module; and
a host device connected to the interface module via a common interface,
wherein the host device receives a signal for playing a recorded content, determines whether the recorded content includes information about a viewing rating restriction by the CICAM, and relieves the viewing rating restriction by at least one from among the interface module and the host device, according to a result of the determination, and
wherein the interface module requests the host device to transmit an input of a personal identification number (PIN) code and transmits confirmative information about the PIN code to the host device.

13. The apparatus for content transaction according to claim 12, the host device comprises:
a receiver configured to receive a broadcast signal;
a signal processor configured to process the received broadcast signal as displayable;
and
a controller configured to execute a confirmation procedure of the PIN code of the interface module according to a signal for requesting an input of the PIN code which is received from the interface module.

14. The apparatus for content transaction according to claim 13, wherein the controller executes a procedure of relieving the viewing rating restriction by the host device if the information about the viewing rating restriction by the interface module is not included in the recorded content.

15. The apparatus for content transaction according to claim 13, wherein the controller executes a procedure of relieving the viewing rating restriction by the host device if the viewing rating restriction by the interface module included in the recorded content is unnecessary or the interface module is not able to process the recorded content.
